# EUROPÄISCHE PATENTSCHRIFT

(11) **EP 3 298 392 B1**
(45) Veröffentlichungstag und Bekanntmachung des Hinweises auf die Patenterteilung: **31.07.2019**
(21) Anmeldenummer: 16721412.1
(22) Anmeldetag: 04.05.2016
(51) Int. Cl.: G01N 21/88, G01N 21/90, G06T 7/00, G01N 21/95

(54) **BLISTERBAND-INSPEKTIONSVORICHTUNG**
BLISTER-STRIP INSPECTION DEVICE
DISPOSITIF D'INSPECTION D'UNE BANDE À ALVÉOLES

(30) Priorität: 18.05.2015 DE 102015107730
(43) Veröffentlichungstag der Anmeldung: 28.03.2018
(73) Patentinhaber: HMGEB Holding B.V., 2561 AJ Den Haag (NL)
(72) Erfinder: VAN SCHELVEN, Gijsbert Olivier, 2561 AJ Den Haag (NL)
(74) Vertreter: Gramm, Lins & Partner Patent- und Rechtsanwälte PartGmbB
(86) Internationale Anmeldenummer: PCT/EP2016/060044
(87) Internationale Veröffentlichungsnummer: WO 2016/184689

(56) Entgegenhaltungen:
- EP-A1- 2 789 542
- WO-A1-2014/119994
- DE-A1- 10 249 962
- DE-U1-202009 012 784
- FR-A1- 2 709 472
- US-A1- 2007 000 805
- US-A1- 2013 282 159
- US-B1- 6 330 351

## Beschreibung

Die Erfindung betrifft eine Blisterband-Inspektionsvorrichtung zum Erfassen von Blisterabschnitten eines Blisterbands gemäß dem Oberbegriff von Anspruch 1.

Um Patienten die Einnahme ihrer Medikamente zu erleichtern, werden sogenannte Blisterbänder angeboten, die aus einer Reihe von Blisterabschnitten bestehen. Jeder Blisterabschnitt enthält ein Kompartiment, in dem ein Medikament aufgenommen sein kann. Zudem sind auf jedem Blisterabschnitt in aller Regel der Name des Patienten, die enthaltenen Medikamente und ein Balkencode zur Identifikation des Beutels angegeben. Derartige Blisterbänder werden voll- oder teilautomatisch hergestellt und unterliegen einer strengen Qualitätskontrolle. So wird für jedes Blisterband dokumentiert, ob in jedem Blisterabschnitt genau die richtigen Medikamente enthalten sind. Zudem wird der Inhalt jedes Blisterabschnittes eines Blisterbands aufgenommen und dokumentiert. Das erfolgt mittels einer Blisterband-Inspektionsvorrichtung.

Aus der DE 102 49 962 A1 ist eine Vorrichtung zur berührungslosen Lageerkennung von Näpfen für Füllgut bekannt, bei der mittels Bilderkennung erfasst wird, ob eine Soll-Position eines Napfes in einem Blisterband der Ist-Position entspricht. Ist dies nicht der Fall, wird eine Zuführvorrichtung so angesteuert, dass sie weiterhin die Näpfe korrekt mit dem Medikament befüllt. Eine derartige Vorrichtung ist für Blisterbänder ohne Näpfe nicht sinnvoll verwendbar.

Aus der US 6,330,351 B1 ist eine Vorrichtung bekannt, die zunächst eine Identifikationsnummer erfasst, dann das zu dieser Identifikationsnummer zugehörige Medikament auf einem Bildschirm darstellt und zudem ein Bild von der Blisterpackung aufnimmt und darstellt, sodass ein Apotheker vergleichen kann, ob die gemäß der Identifikationsnummer vorgegebene Medikation tatsächlich in dem Beutel vorhanden ist. Ein derartiges System ermöglicht keine automatisierte Dokumentation, ob die korrekten Medikamente enthalten waren.

Aus der WO 2014/119994 A1 ist eine Vorrichtung zum automatischen Erfassen des Inhalts von Blisterbeuteln bekannt, die mit Licht unterschiedlicher Wellenlänge arbeitet. Mit dem Licht einer Wellenlänge wird die Kontur der enthaltenen Medikamente erfasst, mit einer anderen Wellenlänge die Farbe. Aus beiden Informationen wird ermittelt, ob diese Medikamente tatsächlich Bestandteil des Blisterbeutels sein sollten. Angaben zu einer etwaigen Dokumentation finden sich nicht.

Aus DE 20 2009 012784 U1 ist eine Vorrichtung zur Kontrolle des Inhalts Medikamente enthaltender Packungseinheiten, insbesondere Beutel, bekannt, bei der zu Dokumentationszwecken in Zuordnung zu einer Identifizierungsinformation eines jeden Beutels ein Bild zusammen mit einem aufgenommenen Reflexionsspektrum sowie einem Ergebnis einer Kontrolle in einer Datenbank abgelegt wird.

Aus EP 2 789 542 A1 ist ein System für die Synchronisation von Workstations für Blister-Verpackungsmaschinen bekannt, bei der, anhand von einer mit mindestens einer Video Kamera aufgenommenen Bildfolge, eine Distanz D zwischen einem zu erkennenden und sich wiederholendem Positionsmerkmal C der Blisterverpackung und einem Referenzelement R bestimmt wird, wobei das Referenzelement R die Position der Blisterverpackung angibt, die diese unter normalen Bedingungen entlang des Transportweges haben müsste. Die ermittelte Distanz D wird zur Synchronisation der Workstations an diese weitergeleitet.

Nachteilig an bekannten Blisterband-Inspektionsvorrichtungen ist, dass sie nur zu einem geringen Umfang eine automatische Dokumentation erlauben.

Der Erfindung liegt die Aufgabe zu Grunde, die Dokumentation des Inhalts von Blisterbändern zu verbessern.

Die Erfindung löst das Problem durch eine Blisterband-Inspektionsvorrichtung mit den Merkmalen von Anspruch 1.

Vorteilhaft an einer derartigen Blisterband-Inspektionsvorrichtung ist, dass das Dokumentieren des Inhalts eines jeden Blisterabschnitts besonders einfach möglich ist. So ermöglicht es die Vorschub-Erfassungsvorrichtung, die Bilderfassungsvorrichtung so anzusteuern, dass sie auf jedem Bild genau einen Blisterabschnitt aufnimmt. Eine manuelle Kontrolle, ob die von der Blisterband-Inspektionsvorrichtung aufgenommenen Bilder auch tatsächlich jeweils nur einen Blisterabschnitt und diesen Blisterabschnitt vollständig zeigen, ist damit sehr einfach. Das führt bei nachfolgenden Arbeitsschritten zu einem geringeren Aufwand und ermöglicht eine quasi vollautomatische Betriebsweise.

Im Rahmen der vorliegenden Beschreibung wird unter einem Blisterband insbesondere eine langgestreckte Anordnung in einer Reihe aufeinander folgender Blisterabschnitte verstanden. Statt von einem Blisterband könnte auch von einem Schlauchblister gesprochen werden. Statt von einem Blisterabschnitt könnte auch von einem Schlauchblisterbeutel gesprochen werden. Es ist möglich, nicht aber notwendig, dass zwischen zwei benachbarten Blisterabschnitten eine Trennhilfe angeordnet ist, beispielsweise eine Perforation. Vorzugsweise ist in zumindest einer Mehrzahl der Blisterabschnitte, insbesondere in allen Blisterabschnitten, zumindest ein Medikament enthalten. Insbesondere umfasst zumindest die Mehrzahl der Blisterabschnitte, insbesondere jeder Blisterabschnitt, ein Kompartiment zum Aufnehmen von Medikamenten, insbesondere Tabletten und/oder Kapseln.

Vorzugsweise weist zumindest die Mehrzahl der Blisterabschnitte, insbesondere jeder Blisterabschnitt, eine Kennung auf, anhand derer auf das Medikament geschlossen werden kann, das in dem Kompartiment enthalten ist. Das kann dadurch geschehen, dass die Verknüpfung zwischen der Markierung und dem Medikament in einer Datenbank abgelegt ist. Bevorzugt umfasst diese Kennung einen Barcode und/oder einen Mustercode, der auch als 2D-Barcode bezeichnet werden könnte.

Unter dem Merkmal, dass die Vorschub-Erfasssungsvorrichtung zum kontinuierlichen Erfassen des Vorschubs ausgebildet ist, wird insbesondere verstanden, dass die Vorschub-Erfassungsvorrichtung eine Positionsänderung von höchstens einem Zentimeter, insbesondere höchstens 0,5 Zentimeter, detektieren kann. Diese Fähigkeit zur Detektion von Positionsänderungen ist unabhängig von der Position des Blisterbands entlang seiner Längserstreckung.

Nicht zum kontinuierlichen Erfassen ausgebildet ist beispielsweise eine Vorschub-Erfassungsvorrichtung, die lediglich erfassen kann, ob das Blisterband an einer vorgegebenen Stelle eine Markierung aufweist oder nicht. In diesem Fall ist es zwar möglich, die Position des Blisterbands mit hoher Genauigkeit zu erfassen, das gilt aber nur für diejenigen Stellen des Blisterbands, die unmittelbar benachbart zu der Markierung liegen. Das ist aber keine kontinuierliche Erfassung.

Günstig ist es, wenn das Blisterband zumindest zwei Folienlagen aufweist. Insbesondere ist das Blisterband aus einem Folienschlauch gebildet, der flach gelegt ist. Die beiden aufeinanderliegenden Teile des Schlauchs sind vorzugsweise so verbunden, dass das Kompartiment für das Medikament gebildet ist. Selbstverständlich ist es auch möglich, dass zwei Folien anderweitig miteinander verbunden sind, beispielsweise verschweißt oder verklebt.

Die Vorschub-Erfassungsvorrichtung weist eine optische Vorschuberfassungseinheit auf. Unter einer optischen Vorschuberfassungseinheit wird eine Vorrichtung verstanden, die aus einem Lichtsignal automatisch den Vorschub ermittelt. So ist es möglich und stellt eine bevorzugte Ausführungsform dar, dass das Blisterband in regelmäßigen Abständen angeordnete Ausnehmungen aufweist und die Vorschuberfassungseinheit einen Unterbrechungssensor zum Ermitteln, ob vor dem Unterbrechungssensor eine Ausnehmung liegt, aufweist. Die Vorschuberfassungseinheit ist dann ausgebildet zum automatischen Erfassen der Zahl der Ausnehmungen, die den Unterbrechungssensor passiert haben, und zum Berechnen des Vorschubs aus dieser Zahl.

Gemäß einer bevorzugten Ausführungsform ist die Vorschub-Erfassungsvorrichtung zur Erfassung des Vorschubs mittels Bildkorrelation ausgebildet. In diesem Fall umfasst die Vorschub-Erfassungsvorrichtung eine Lichtquelle, beispielsweise eine Leuchtdiode oder einen Laser, sowie einen Bildsensor. Durch Autokorrelationsrechnung zwischen Bildern, die nacheinander aufgenommen wurden, kann die Verschiebung des Musters relativ zum Bildsensor ermittelt werden. Dieses Prinzip ist von Computermäusen bekannt. Selbstverständlich ist es möglich, dass die Vorschub-Erfassungsvorrichtung sowohl zum Ermitteln des Vorschubs mittels Bildkorrelation als auch durch mechanischen Kontakt ausgebildet ist. Beispielsweise ist es möglich, dass die Vorschub-Erfassungsvorrichtung mittels zwei oder mehr Verfahren den jeweils einen Vorschubwert ermittelt und den Vorschub dann aus den Vorschubwerten bestimmt, beispielsweise durch Mittelwertbildung.

Die Bilderfassungsvorrichtung umfasst eine Digital-Kamera und die Blisterband-Inspektionsvorrichtung weist eine Auswerteeinheit auf, die mit der Digital-Kamera und der Vorschub-Erfassungsvorrichtung verbunden und eingerichtet ist zum automatischen Durchführen eines Verfahrens mit den Schritten (i) Erfassen des Vorschubs des Blisterbands, (ii) Ermitteln eines Ziel-Zeitpunkts zumindest auch anhand des Vorschubs, zu dem ein Blisterabschnitt sich vollständig im Sichtfeld der Digital-Kamera befindet, und (iii) Erfassen eines Bildes der Digital-Kamera zu diesem Ziel-Zeitpunkt.

Das Ermitteln des Ziel-Zeitpunkts kann beispielsweise dadurch erfolgen, dass zunächst eine Start-Markierung erfasst wird. Das kann beispielsweise mit der Bilderfassungsvorrichtung geschehen oder aber mit einem Sensor der Vorschub-Erfassungsvorrichtung. Es ist zudem möglich, den Start-Zeitpunkt oder die Lage des Blisterbands relativ zu der Blisterband-Inspektionsvorrichtung manuell festzulegen. Da die Länge der Blisterabschnitte bekannt ist, kann aus der jeweiligen Vorschubgeschwindigkeit berechnet werden, zu welchem Zeitpunkt sich ein Blisterabschnitt genau im Sichtfeld der Digital-Kamera befindet.

Unter dem Merkmal, dass sich der Blisterabschnitt vollständig im Sichtfeld der Digital-Kamera befindet, wird insbesondere verstanden, dass der Blisterabschnitt zu einem so großen Umfang im Sichtfeld der Digital-Kamera angeordnet ist, dass die für die Auswertung maßgeblichen Elemente des Blisterabschnitts erkennbar sind. Es ist möglich, nicht aber notwendig, dass der Blisterabschnitt gänzlich im Sichtfeld der Digital-Kamera angeordnet ist.

Unter dem Merkmal, dass das Ermitteln des Ziel-Zeitpunkts zumindest auch anhand des Vorschubs erfolgt, wird insbesondere verstanden, dass bei der Bestimmung des Ziel-Zeitpunkts der Vorschub eingeht. Es ist möglich, nicht aber notwendig, dass bei der Bestimmung des Ziel-Zeitpunkts weitere Kriterien berücksichtigt werden. Kann der Vorschub jedoch nicht ermittelt werden, kann auch der Zeitpunkt nicht errechnet werden.

Es ist möglich, nicht aber notwendig, dass der Ziel-Zeitpunkt direkt bestimmt wird. So ist es möglich, dass ein Auslöse-Impuls erzeugt wird, aufgrund dessen die Bilderfassungsvorrichtung auslöst und zumindest ein Bild aufnimmt. Alternativ oder zusätzlich ist es möglich, dass ein Ziel-Zeitpunkt in einer Zeiteinheit ausgedrückt wird. So ist es beispielsweise möglich, dass die Auswerteeinheit einen Zeitpunkt an die Bilderfassungsvorrichtung sendet, zu dem diese ein Bild aufnehmen soll. Die Bilderfassungsvorrichtung besitzt in diesem Fall eine Uhr und ist eingerichtet zum Auslösen zu genau diesem Zeitpunkt.

Es ist günstig, wenn die Bilderfassungsvorrichtung eine Videokamera umfasst, die ein Sichtfeld hat und ausgebildet ist zum Aufnehmen einer Bildfolge aus zeitlich aufeinander folgenden Bildern, wobei die Auswerteeinheit eingerichtet ist zum automatischen Ermitteln des Ziel-Zeitpunkts, zu dem ein Blisterabschnitt vollständig im Sichtfeld ist, zumindest auch anhand des Vorschubs, zum Entnehmen eines Bildes aus der Bildfolge, sodass ein Kontrollbild entsteht, zum Speichern des Kontrollbilds und zum Wiederholen der genannten Schritte, sodass eine Kontrollbildfolge entsteht.

Günstig ist es, wenn diese Kontrollbildfolge mit einer Kennung des Blisterbands verknüpft wird. In diesem Fall kann anhand der Kontrollbildfolge eindeutig festgestellt werden, welche Medikamente in dem Blisterband enthalten sind oder waren.

Die Auswerteeinheit ist eingerichtet zum automatischen Durchführen eines Verfahrens mit den Schritten eines Erfassens zumindest eines vorlaufenden Bildes im Zeitpunkt, der kurz vordem Ziel-Zeitpunkt liegt und/oder Erfassen zumindest eines nachlaufenden Bildes zu einem Zeitpunkt, der kurz nach dem Ziel-Zeitpunkt liegt, sowie zum Ermitteln mittels Bilderkennung, in welchem der Bilder der größte Anteil eines Blisterabschnitts hinreichend vollständig enthalten ist, und Speichern dieses Bildes als Kontrollbild. Sollte die Vorschub-Erfassungsvorrichtung zur Bestimmung des Vorschubs einen Messfehler gemacht haben, so führt dies dazu, dass im Sichtfeld kein vollständiger Blisterabschnitt zu erkennen ist, sondern lediglich ein Teil davon. Zu einem früheren oder späteren Zeitpunkt hingegen würde ein größerer Teil des Blisterabschnitts im Sichtfeld und damit im Bild erscheinen. Durch Aufnehmen eines vorlaufenden Bildes und/oder eine nachlaufenden Bildes kann dasjenige Bild ermittelt werden, bei dem der größte Anteil des Blisterabschnitts im Bild enthalten ist. Dieses Bild ist als Kontrollbild besser geeignet als das zum Ziel-Zeitpunkt aufgenommene.

Es ist möglich und stellt eine bevorzugte Ausführungsform dar, dass bei der Bestimmung des Ziel-Zeitpunkts für den nächsten Blisterabschnitt die Korrektur beim vorherigen Blisterabschnitt berücksichtigt wird, sodass beim Aufnehmen des nachfolgenden Blisterabschnitts keine Korrekturen notwendig sind, sofern die Vorschub-Erfassungsvorrichtung keinen Messfehler gemacht hat.

Unter dem Merkmal, dass der Zeitpunkt kurz vor dem Ziel-Zeitpunkt liegt, wird insbesondere verstanden, dass eine Zeitdifferenz zwischen dem Ziel-Zeitpunkt und dem Zeitpunkt, zu dem das vorlaufende beziehungsweise nachlaufende Bild aufgenommen wird, kleiner ist als eine Sekunde, insbesondere kleiner als 0,5 Sekunden.

Günstig ist es, wenn die Blisterband-Inspektionsvorrichtung eine Fördervorrichtung zum automatischen Fördern des Blisterbands aufweist. Beispielsweise umfasst die Fördervorrichtung eine Aufwickelhaspel und eine Abwickelhaspel, wobei die Erfassungsvorrichtung so angeordnet ist, dass sie ein Bild des Blisterbands zwischen der Aufwickelhaspel und der Abwickelhaspel aufnehmen kann. Es ist möglich, nicht aber notwendig, dass die Vorschub-Erfassungsvorrichtung oder Teile davon Bestandteil der Fördervorrichtung ist. Beispielsweise ist es möglich, dass die Fördervorrichtung das Blisterband mittels eines Reibrads und/oder einer Spindel fördert und dabei den Vorschub erfasst. Die Fördervorrichtung ist jedoch entbehrlich, es ist möglich, das Blisterband durch händisches Durchziehen zu bewegen.

Günstig ist es wenn die Fördervorrichtung eine Aufwickelvorrichtung umfasst, die eine Aufwickelhaspel und einen Antriebsmotor zum Antreiben der Aufwickelhaspel besitzt, wobei der Antriebsmotor so mit der Vorschub-Erfassungsvorrichtung verbunden ist, dass eine Drehfrequenz der Aufwickelhaspel von der Länge des Blisterbands abhängt, die die Vorschub-Erfassungsvorrichtung erfasst hat. Günstig ist es insbesondere, wenn die Auswerteeinheit mit dem Antriebsmotor verbunden und eingerichtet ist zum Ansteuern des Antriebsmotors. Da sich beim Aufwickeln des Blisterbands der Wickel auf der Aufwickelhaspel beständig vergrößert, sinkt die Drehfrequenz, mit der die Aufwickelhaspel gedreht werden muss, sodass ein konstanter Vorschub erreicht wird. In anderen Worten ist die Blisterband-Inspektionsvorrichtung eingerichtet zum automatischen Berechnen des Radius des Wickels auf der Aufwickelhaspel und zum Antreiben des Antriebsmotors der Aufwickelhaspel, sodass das Blisterband mit einem konstanten Vorschub bewegbar ist.

Günstig ist es zudem, wenn die Fördervorrichtung eine Abwickelhaspel aufweist, von der das Blisterband beim Betrieb der Blisterband-Inspektionsvorrichtung abgewickelt wird.

Ein erfindungsgemäßes Verfahren wird vorzugsweise unter Verwendung einer erfindungsgemäßen Blisterband-Inspektionsvorrichtung durchgeführt.

Im Folgenden wird die Erfindung anhand der beigefügten Zeichnungen näher erläutert. Dabei zeigt:
- Figur 1: eine schematische Ansicht einer erfindungsgemäßen Blisterband-Inspektionsvorrichtung und
- Figur 2: einen Blisterabschnitt, wie er von einer Bilderfassungsvorrichtung der Blisterband-Inspektionsvorrichtung zum Ziel-Zeitpunkt erfasst wird.

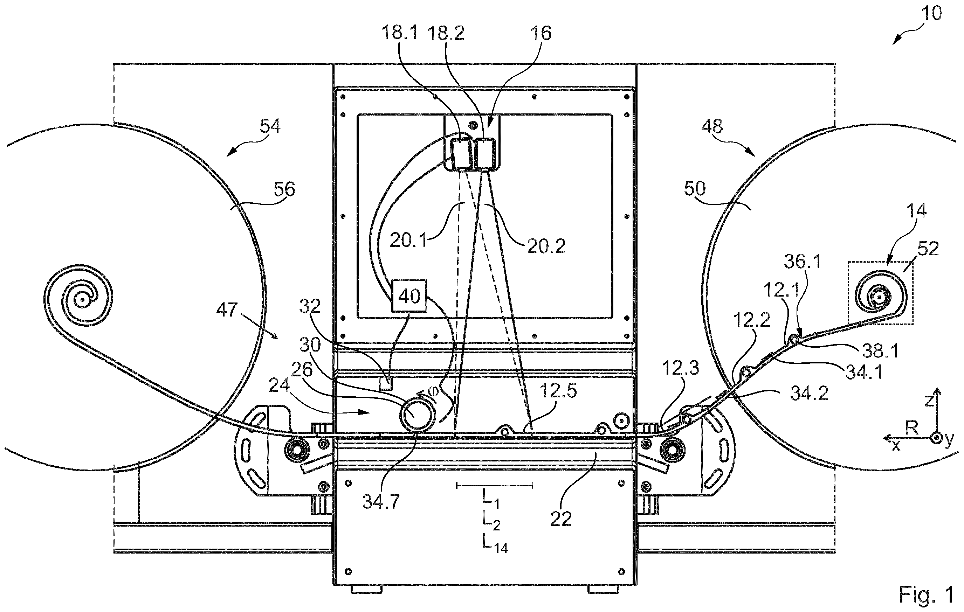

Figur 1 zeigt eine erfindungsgemäße Blisterband-Inspektionsvorrichtung 10 zum Erfassen von Blisterabschnitten 12.1, 12.2, ... eines Blisterbands 14. Die Blisterband-Inspektionsvorrichtung 10 besitzt eine Bilderfassungsvorrichtung 16, die im vorliegenden Fall eine erste Kamera 18.1 und eine zweite Kamera 18.2 umfasst.

Die erste Kamera 18.1 besitzt ein erstes Sichtfeld 20.1, die zweite Kamera 18.2 besitzt ein zweites Sichtfeld 20.2. Die Blisterband-Inspektionsvorrichtung 10 hat einen Fördertisch 22, auf dem das Blisterband 14 gefördert wird. Auf dem Fördertisch 22 fallen die Sichtfelder 20.1, 20.2 zusammen.

Es ist zu erkennen, dass die Sichtfelder 20.1, 20.2 so ausgebildet sind, dass ihre jeweiligen Längen L₁, L₂ auf dem Fördertisch 22 zumindest einer Blisterabschnittslänge L₁₄ entsprechen. Es ist daher möglich, einen Blisterabschnitt 12 mit beiden Kameras 18.1, 18,2 gleichzeitig aufzunehmen.

Die Blisterband-Inspektionsvorrichtung 10 besitzt eine Vorschub-Erfassungsvorrichtung 24, die im vorliegenden Fall ein Reibrad 26 aufweist. Das Reibrad 26 ist so angeordnet, dass das Blisterband 14, das über den Fördertisch 22 gleitet, das Reibrad 26 schlupffrei dreht. Das Reibrad 26 ist mit einer Drehwinkelerfassungsvorrichtung 28 verbunden, mittels der ein Drehwinkel ϕ in Abhängigkeit von der Zeit t erfasst wird.

Die Vorschub-Erfassungsvorrichtung 24 ist im vorliegenden Fall so ausgebildet, dass sie einen Vorschub x, also eine Bewegung auf dem Fördertisch 22 entlang einer x-Achse, mit einer Genauigkeit von 0,1 Millimeter auflöst. Bewegt sich das Blisterband 14 in Vorschubrichtung R, so wird mittels der Vorschub-Erfassungsvorrichtung 24 der Vorschub x kontinuierlich erfasst. Mit anderen Worten ist zu jedem Zeitpunkt t mit einer Genauigkeit von zumindest einem Millimeter, im vorliegenden Fall 0,1 Millimeter, bekannt, wie groß der Vorschub x ist, wie also die Position des Blisterbands 14 entlang der Vorschubrichtung R auf dem Fördertisch 22 ist.

Um den Schlupf zwischen dem Blisterband 14 und dem Reibrad 26 so klein wie möglich zu halten, besitzt das Reibrad 26 ein Rutschhemmelement 30, im vorliegenden Fall in Form eines Gummireifens, der besonders bevorzugt profiliert ausgebildet ist. So wird der Reibschluss zwischen dem Reibrad 26 und dem Blisterband 14 sichergestellt.

Die Blisterband-Inspektionsvorrichtung 10 kann optional einen Positioniersensor 32 besitzen, der eine schematisch eingezeichnete Markierung 34 eines Blisterabschnitts 12 oder des Blisterbands 14 erkennen kann. Beispielsweise ist gemäß einer bevorzugten Ausführungsform vorgesehen, dass jedes Blisterband 14 zumindest eine Markierung besitzt, anhand der der Beginn einer Folge von Blisterabschnitten erkennbar ist. Beispielsweise kodiert diese Markierung, dass ein Abschnitt des Blisterbands 14 beginnt, der für einen bestimmten Patienten bestimmt ist. Ist dieser Blisterabschnitt beendet und folgt ein nächster Blisterabschnitt für einen weiteren, anderen Patienten, so besitzt das Blisterband 14 eine weitere Markierung.

Es ist aber auch möglich, dass jeder Blisterabschnitt 12.i, also die Blisterabschnitte 12.1, 12.2, 12.3, ..., eine eigene Markierung 34 aufweist, anhand der der Inhalt des Blisterabschnitts bestimmt werden kann. So ist für den Blisterabschnitt 12.1 schematisch ein Kompartiment 36.1 eingezeichnet, in dem ein Medikament 38.1 enthalten ist. Anhand der Markierung 34.1 kann durch Abfragen einer Datenbank festgestellt werden, welches Medikament 38.1 im Kompartiment 36.1 enthalten ist.

Durchläuft eine Markierung 34 (Bezugszeichen ohne Zählsuffix beziehen sich auf alle entsprechenden Objekte) den Positioniersensor 32, so erfasst dieser das Vorhandensein der Markierung. Da die Lage der Markierung 34 zum jeweiligen Blisterabschnitt 12 bekannt ist, ist damit auch die Position des Blisterabschnitts 12 auf dem Fördertisch 22 bekannt. Da durch die Vorschub-Erfassungsvorrichtung 24 jede Lagerveränderung des Blisterbands 14 ermittelt wird, kann die Lage jedes einzelnen Blisterabschnitts 12.i (i=1, 2, 3, ...) bestimmt werden, auch wenn der Positioniersensor 32 kein auswertbares Signal liefern sollte. Das kann beispielsweise dann der Fall sein, wenn der Blisterschlauch 14 stark reflektiert.

Die Vorschub-Erfassungsvorrichtung 24 ist mit einer Auswerteeinheit 40 verbunden. Die Auswerteeinheit 40 erfasst den Vorschub x(t) des Blisterbands 14 und ermittelt zu jedem Zeitpunkt t, ob sich im Sichtfeld 20.1 und/oder im Sichtfeld 20.2 ein Blisterabschnitt 12 vollständig befindet. Das ist zum Ziel-Zeitpunkt tᵢ für den Blisterabschnitt 12.i der Fall. Zu diesem Ziel-Zeitpunkt tᵢ löst die Auswerteeinheit 40 die Kameras 18.1, 18.2, aus, so dass diese jeweils zumindest ein Bild aufnehmen.

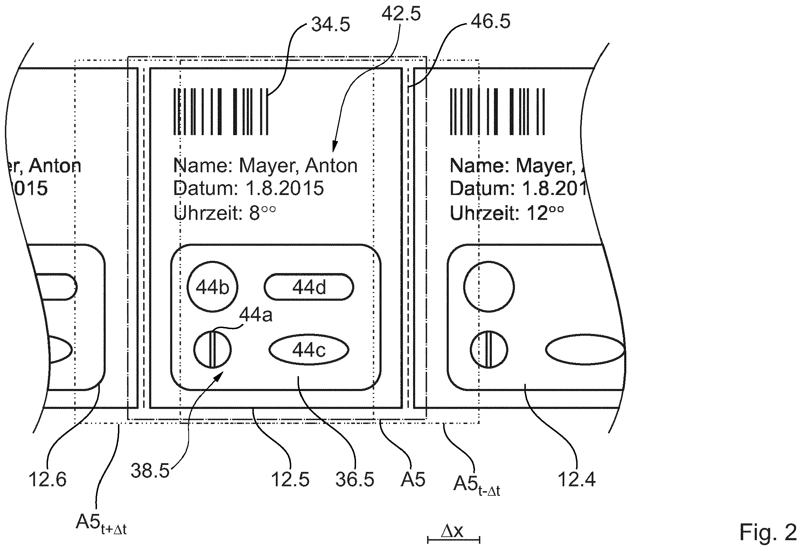

Figur 2 zeigt schematisch ein Bild A5 des Blisterabschnitts 12.5, der zum Ziel-Zeitpunkt t₅ in den Sichtfeldern 20.1, 20.2 der Kameras 18.1, 18.2 liegt. Der Umfang des Bilds A5 ist mit einer Strichpunktlinie gezeichnet.

Zu erkennen ist die Markierung 34.5, die im vorliegenden Fall durch einen Barcode gebildet ist. Zu erkennen ist zudem, dass der Blisterabschnitt 12.5 eine Beschriftung 42.5 aufweist, die Teil der Markierung 34.5 ist und den Namen des Patienten sowie den Einnahmezeitpunkt enthält, zu dem die Medikamente 38.5, im vorliegenden Fall die Tabletten 44a, 44b und 44d, einzunehmen sind. Die Medikamente 38.5 sind in dem Kompartiment 36.5 enthalten.

Der Blisterabschnitt 12 ist aus zwei miteinander fest verbundenen Folienlagen aufgebaut, die aus durchsichtigem Kunststoff bestehen, sodass die Medikamente 38.5 sichtbar sind.

Figur 2 zeigt, dass zwei benachbarte Blisterabschnitte, im vorliegenden Fall die Blisterabschnitte 12.5 und 12.4, über eine Perforierung 46.5 miteinander verbunden sind, sodass sie leicht voneinander trennbar sind.

Das Bild A5 wird von der Kamera 18.1 an die Auswerteeinheit 40 geschickt und dort gespeichert. Das Blisterband 14 bewegt sich kontinuierlich über den Fördertisch 22.

Berechnet die Auswerteeinheit 40 auf Basis der Daten der Vorschub-Erfassungsvorrichtung 24, dass sich der nachfolgende Blisterabschnitt, im vorliegenden Fall der Blisterabschnitt 12.6, im Sichtfeld 20.1 der ersten Kamera 18.1 befindet, wird ein weiteres Bild ausgelöst und von der Auswerteeinheit 40 so gespeichert, dass nachvollziehbar ist, dass unmittelbar aufeinander folgende Blisterabschnitte aufgenommen wurden. So entsteht eine Bilderfolge A1, A2, A3, ..., die manipulationssicher in einem Speicher der Auswerteeinheit gespeichert wird, sodass jedem Blisterband 14 die zugehörige Bilderfolge eineindeutig zugeordnet ist. Die Bilder, die der Bilderfolge angehören, werden als Kontrollbilder bezeichnet.

Sind, wie in der vorliegenden Ausführungsform dargestellt, zwei Kameras (18.1, 18.2) vorhanden, so nimmt jede der Kameras zumindest ein Bild, insbesondere genau ein Bild auf, sodass für jeden Blisterabschnitt zwei Bilder gespeichert werden.

Es ist möglich, dass zumindest eine der Kameras 18.1, 18.2 eine Videokamera ist, die eine kontinuierliche Folge von zeitlich äquidistanten Bildern aufnimmt, die zwischengespeichert werden. Die Auswerteeinheit 40 bestimmt diejenigen Zeitpunkte tᵢ, zu denen sich ein Blisterabschnitt 12.i im Sichtfeld zumindest einer der Kameras befindet und entnimmt aus dem Bilderstrom lediglich das Bild, auf dem das Bild des Blisterabschnitts zu erkennen ist. So wird die zu speichernde Datenmenge reduziert.

Es kann in seltenen Fällen der Fall eintreten, dass die Vorschub-Erfassungsvorrichtung 24 einen Messfehler verursacht. In diesem Fall ist der jeweilige Blisterabschnitt 12 nicht zentrisch im jeweiligen Bild A aufgenommen, sondern seitlich dazu verschoben. Figur 2 zeigt das Bild A5_{t-Δt}, das zu einem um Δt zu frühen Zeitpunkt aufgenommen wurde.

Es kann daher vorteilhaft sein, ohne dass es notwendig ist, dass die Auswerteeinheit 40 aus dem Bilderstrom der zumindest einen Videokamera auch zumindest ein Bild entnimmt, das zu einem früheren oder späteren Zeitpunkt aufgenommen wurde, wobei der zeitliche Abstand Δt zwischen zeitlich benachbarten Bildern vorzugsweise so klein ist, dass das Blisterband 14 im dementsprechenden Zeitintervall einen Weg von höchstens 1 Zentimeter, beispielsweise höchstens 0,5 Zentimeter, zurückgelegt hat.

Die Auswerteeinheit 40 ermittelt dann mittels eines Mustererkennungs-Algorithmus die Lage des jeweiligen Blisterabschnitts 12.i im jeweiligen Bild A und wählt das Bild aus, bei dem der Blisterabschnitt zu einem möglichst großen Umfang zu erkennen ist. Das kann beispielsweise dadurch erfolgen, dass die Lage der Markierung 34 und/oder der Perforierung 46 oder einer anderen charakteristischen Struktur des Blisterabschnitts ermittelt und mit einer Soll-Position verglichen wird. Das Bild, für das dieser Abschnitt minimal wird, wird ausgewählt und zur Dokumentation gespeichert. Im vorliegenden Beispiel ist das das Bild A5 und nicht das Bild A5_{t-Δt}.

So nimmt die Videokamera beispielsweise die Bildfolge A(t = t₀ + nΔT) auf (n=1, 2, 3, ..., ΔT ist der zeitliche Bildabstand), wobei das Bild A(t₀ + nₖΔT) in dieser Notation dem Bild A5 von oben entspricht. Die Auswerteeinheit 40 ermittelt nun die Lage der Markierung 34.5 in den Bildern A(t₀ + nₖ₋₁ΔT) (=A5_{t-Δt}), A(t₀ + nₖΔT) (= A5) und A(t₀ + nₖ₊₁ΔT) (= A5_{t+Δt}), wobei (k=1, 2, 3, ...) gilt. Da die Markierung 34.5 im Bild A(t₀ + nₖΔT) (= A5) der idealen Lage im Bild am nächsten kommt, wird dieses Bild Ai=A5, das zum Zeitpunkt tᵢ₌₅ = t₀ + nₖΔT aufgenommen wurde, als Kontrollbild ausgewählt und die übrigen Bilder des Blisterabschnitts 12.5 verworfen.

In anderen Worten wird zu dem Bild Ai (hier: i = 5) zumindest ein vorlaufendes Bild A5_{t-Δt} zu einem Zeitpunkt t₀ + nₖ₋₁ΔT aufgenommen, der um den Bildabstand ΔT vor dem Ziel-Zeitpunkt t5= t₀ + nₖΔT liegt, erfasst und es wird ein nachlaufendes Bild A5_{t+Δt} zu einem Zeitpunkt t₀ + nₖ₊₁ΔT aufgenommen, der um den Bildabstand ΔT nach dem Ziel-Zeitpunkt liegt. Es wird dann mittels Bilderkennung ermittelt, in welchem der Bilder der größte Anteil des Blisterabschnitts 12.i hinreichend vollständig enthalten ist, und dieses Bild als Kontrollbild gespeichert.

Ergibt sich, dass der jeweilige Blisterabschnitt nicht ideal im Bild zu erkennen ist, wird von der Auswerteeinheit 40 der räumliche Versatz zur Ideal-Position bestimmt. In anderen Worten wird von der Auswerteeinheit 40 ermittelt, um welchen Vorschub Δx der jeweilige Blisterabschnitt verschoben werden müsste, um ideal im jeweiligen Sichtfeld 20 der Kamera zu liegen. Der Zeitpunkt, zu dem das nächste Bild ausgelöst wird, wird um diese Korrektur korrigiert, sodass systematische Messfehler der Vorschub-Erfassungsvorrichtung automatisch korrigiert werden.

Die Blisterband-Inspektionsvorrichtung 10 umfasst eine Fördervorrichtung 47 zum Fördern des Blisterbands 14. Die Fördervorrichtung 47 umfasst eine Aufwickelvorrichtung 48, die eine Aufwickelhaspel 50 und einen schematisch eingezeichneten Antriebsmotor 52 aufweist, der in Figur 1 von der Aufwickelhaspel 50 verdeckt ist. Im Betrieb wird das Blisterband 14 auf die Aufwickelvorrichtung 48 aufgewickelt. Die Blisterband-Inspektionsvorrichtung 10 besitzt zudem eine Abwickelvorrichtung 54, die eine Abwickelhaspel 56 aufweist. Es ist möglich, nicht aber notwendig, dass die Abwickelhaspel 56 mit einem Motor angetrieben ist.

Der Antriebsmotor 52 ist mit der Auswerteeinheit 40 verbunden. Die Auswerteeinheit 40 berechnet aus dem Vorschub x=x(t) durch numerische Integration die Bandlänge L₁₄ des Blisterbands 14, die bereits auf die Aufwickelhaspel 50 aufgewickelt ist. Im digitalen Speicher der Auswerteeinheit 40 ist eine Tabelle oder Formel abgelegt, aus der die Drehfrequenz ableitbar ist, mit der der Antriebsmotor 52 betrieben werden muss, so dass das Blisterband 14 weder zu straff noch zu locker auf die Aufwickelhaspel 50 aufgewickelt wird. Eine derartige Steuerung der Drehfrequenz ist jedoch entbehrlich.

Alternativ kann der Antriebsmotor 52 beispielsweise mit einem konstanten Drehmoment betrieben werden, das so gewählt ist, dass der Wickel auf der Aufwickelhaspel 50 weder zu straff noch zu locker aufgewickelt wird. Alternativ dazu wird auch eine Vorrichtung vorhanden sein, die erfasst, wie stark das Blisterband 14 durchhängt, und die anhand des Durchhängens des Blisterbands die Drehfrequenz des Antriebsmotors 52 steuert.

Es ist möglich, dass statt von der Abwickelhaspel 56 das Blisterband 14 direkt von einer Verblisterungsmaschine zugeführt wird. Erfindungsgemäß ist daher auch eine Verblisterungsmaschine, die eine erfindungsgemäße Blisterband-Inspektionsvorrichtung umfasst.

**Bezugszeichenliste**

| | | | |
|---|---|---|---|
| 10 | Blisterband-Inspektionsvorrichtung | 42 | Beschriftung |
| 12 | Blisterabschnitt | 44a | Tablette |
| 14 | Blisterband | 46 | Perforierung |
| 16 | Bilderfassungsvorrichtung | 47 | Fördervorrichtung |
| 18.1 | erste Kamera | 48 | Aufwickelvorrichtung |
| 18.2 | zweite Kamera | | |
| | | 50 | Aufwickelhaspel |
| 20.1 | Sichtfeld | 52 | Antriebsmotor |
| 20.2 | Sichtfeld | 54 | Abwickelvorrichtung |
| 22 | Fördertisch | 56 | Abwickelhaspel |
| 24 | Vorschub-Erfassungsvorrichtung | | |
| 26 | Reibrad | A | Bild |
| 28 | Drehwinkelerfassungsvorrichtung | L | Länge |
| | | L₁₄ | Bandlänge |
| 30 | Rutschhemmelement | i | Zählindex i = 1, 2, 3, |
| 32 | Positioniersensor | R | Vorschubrichtung |
| 34 | Markierung | | |
| 36 | Kompartiment | t | Zeit |
| 38 | Medikament | x | Vorschub |
| | | ϕ | Drehwinkel |
| 40 | Auswerteeinheit | | |

## Patentansprüche

1. Blisterband-Inspektionsvorrichtung (10) zum Erfassen von Blisterabschnitten (12) eines Blisterbands (14), mit
(a) einer Bilderfassungsvorrichtung (16), die angeordnet ist zum Aufnehmen von Bildern des Blisterbands (14), wobei die Bilderfassungsvorrichtung (16) eine Digital-Kamera (18.1) umfasst,
(b) einer Vorschub-Erfassungsvorrichtung (24) zum kontinuierlichen Erfassen eines Vorschubs (x) des Blisterbands (14), und
(c) einer Auswerteeinheit (40), die mit der Digital-Kamera (18.1) und der Vorschub-Erfassungsvorrichtung (24) verbunden ist und eingerichtet ist zum automatischen Durchführen eines Verfahrens mit den Schritten:
(i) Erfassen des Vorschubs des Blisterbands (14),
(ii) Ermitteln eines Ziel-Zeitpunkts (tᵢ) zumindest auch anhand des Vorschubs, zu dem ein Blisterabschnitt (12.i) sich vollständig im Sichtfeld (20.1) der Digital-Kamera befindet, und
(iii) Erfassen eines Bildes der Digital-Kamera (18.1) zu diesem Ziel-Zeitpunkt (tᵢ),
(d) wobei die Digital-Kamera (18.1) eine Videokamera ist, die
- ein Sichtfeld hat (20.1, 20.2) und
- ausgebildet ist zum Aufnehmen einer Bildfolge aus zeitlich aufeinander folgenden Bildern,
wobei
(e) die Auswerteeinheit (40) eingerichtet ist zum automatischen
(i) Ermitteln des Ziel-Zeitpunkts (t), zu dem ein Blisterabschnitt (12.i) vollständig im Sichtfeld (20.1, 20.2) ist, zumindest auch anhand des Vorschubs (x),
(ii) Entnehmen eines Bilds (Aᵢ) aus der Bildfolge, sodass ein Kontrollbild entsteht,
(iii) Speichern des Kontrollbilds und
(iv) Wiederholen der Schritte (i) bis (iii), sodass eine gespeicherte Kontrollbildfolge entsteht und
(f) die Auswerteeinheit (40) eingerichtet ist zum automatischen
- Erfassen zumindest eines vorlaufenden Bilds zu einem Zeitpunkt, der kurz vor dem Ziel-Zeitpunkt (tₗ) liegt und/oder Erfassen zumindest eines nachlaufenden Bilds (A) zu einem Zeitpunkt, der kurz nach dem Ziel-Zeitpunkt liegt,
- Ermitteln mittels Bilderkennung, in welchem der Bilder der größte Anteil eines Blisterabschnitts (12) hinreichend vollständig enthalten ist, und
- Speichern dieses Bilds (A) als Kontrollbild.

2. Blisterband-Inspektionsvorrichtung (10) nach Anspruch 1, **dadurch gekennzeichnet, dass**
die Vorschub-Erfassungsvorrichtung (24) zur Erfassung des Vorschubs (x) mittels Bildkorrelation ausgebildet ist.

3. Blisterband-Inspektionsvorrichtung (10) nach einem der vorstehenden Ansprüche, **gekennzeichnet durch** eine Fördervorrichtung (47) zum automatischen Fördern des Blisterbands (14).

4. Blisterband-Inspektionsvorrichtung (10) nach Anspruch 3, **dadurch gekennzeichnet, dass** die Fördervorrichtung (47)
- eine Aufwickelvorrichtung (48) umfasst, die eine Aufwickelhaspel (50) und einen Antriebsmotor (52) zum Antreiben der Aufwickelhaspel (50) besitzt,
- wobei der Antriebsmotor (52) so mit der Vorschub-Erfassungsvorrichtung (24) verbunden ist, dass eine Drehfrequenz der Aufwickelhaspel (50) von der Länge des Blisterbands (14) abhängt, die die Vorschub-Erfassungsvorrichtung (24) erfasst hat.

## Claims

1. A blister strip inspection device (10) for sensing blister segments (12) of a blister strip (14), having
(a) an image acquisition device (16) which is arranged to capture images of the blister strip (14), wherein the image acquisition device (16) comprises a digital camera (18.1),
(b) an advance sensing device (24) for continuously sensing an advance (x) of the blister strip (14), and
(c) an evaluating unit (40) which is connected to the digital camera (18.1) and to the advance sensing device (24) and which is configured to automatically perform a method having the following steps:
(i) sensing the advance of the blister strip (14),
(ii) determining a target time (tᵢ), at least also on the basis of the advance, at which a blister segment (12.i) is completely in the field of view (20.1) of the digital camera, and
(iii) acquiring an image with the digital camera (18.1) at said target time (tᵢ),
(d) wherein the digital camera (18.1) is a video camera which
- has a field of view (20.1, 20.2) and
- is formed to capture an image sequence consisting of temporally successive images,
wherein
(e) the evaluating unit (40) is configured to automatically
(i) determine the target time (tᵢ) at which a blister segment (12.i) is completely in the field of view (20.1, 20.2), at least also on the basis of the advance (x),
(ii) take an image (Aᵢ) from the image sequence such that a monitoring image is generated,
(iii) store the monitoring image and
(iv) repeat steps (i) to (iii) such that a stored monitoring image sequence is generated and
(f) the evaluating unit (40) is configured to automatically
- acquire at least one preceding image at a time which lies shortly before the target time (tᵢ) and/or acquire at least one following image (A) at a time that lies shortly after the target time,
- determine which of the images sufficiently completely contains the greatest portion of a blister segment (12) by means of image recognition, and
- store this image (A) as a monitoring image.

2. The blister strip inspection device (10) according to Claim 1, **characterised in that** the advance sensing device (24) is formed to sense the advance (x) by means of image correlation.

3. The blister strip inspection device (10) according to any one of the previous claims, **characterised by** a conveying device (47) for automatically conveying the blister strip (14).

4. The blister strip inspection device (10) according to Claim 3, **characterised in that** the conveying device (47)
- comprises a coiling device (48) which features a coiler (50) and a drive motor (52) for driving the coiler (50),
- wherein the drive motor (52) is connected to the advance sensing device (24) such that a rotational frequency of the coiler (50) is dependent on the length of the blister strip (14) which the advance sensing device (24) has sensed.

## Revendications

1. Dispositif (10) d'inspection de bande blister pour détecter des portions de blister (12) d'une bande blister (14), comportant
(a) un dispositif d'acquisition d'image (16) qui est prévu pour prendre des images de la bande blister (14), le dispositif d'acquisition d'image (16) comprenant une caméra numérique (18.1),
(b) un dispositif de détection d'avance (24) pour détecter en continu une avance (x) de la bande blister (14), et
(c) une unité d'évaluation (40) qui est connectée à la caméra numérique (18.1) et au dispositif de détection d'avance (24) et qui est conçue pour mettre en oeuvre automatiquement un procédé comprenant les étapes consistant à :
(i) détecter l'avance de la bande blister (14),
(ii) déterminer un instant cible (tᵢ) au moins également en se basant sur l'avance, instant auquel la portion blister (12.i) se trouve complètement dans le champ de vision (20.1) de la caméra numérique, et
(iii) acquérir une image de la caméra numérique (18.1) à cet instant cible (tᵢ),
(d) la caméra numérique (18.1) étant une caméra vidéo qui
- comprend un champ de vision (20.1, 20.2) et
- est réalisée pour prendre une succession d'images qui se succèdent dans le temps,
dans lequel
(e) l'unité d'évaluation (40) est conçue pour automatiquement
(i) déterminer l'instant cible (tᵢ) auquel une portion blister (12.i) se trouve complètement dans le champ de vision (20.1, 20.2), au moins également en se basant sur l'avance (x),
(ii) prélever une image (Ai) de la succession d'images, de manière à obtenir une image de contrôle,
(iii) mémoriser l'image de contrôle, et
(iv) répéter les étapes (i) à (iii), de manière à obtenir une succession d'images de contrôle mémorisée, et
(f) l'unité d'évaluation (40) est conçue pour automatiquement
- acquérir au moins une image précédente à un instant qui est peu avant l'instant cible (tᵢ) et/ou acquérir au moins une image (A) suivante à un instant qui est peu après l'instant cible,
- déterminer au moyen d'une reconnaissance d'image dans laquelle des images la majeure partie d'une portion blister (12) est contenue suffisamment complètement, et
- mémoriser cette image (A) à titre d'image de contrôle.

2. Dispositif (10) d'inspection de bande blister selon la revendication 1, **caractérisé en ce que**
le dispositif (24) de détection d'avance est réalisé pour détecter l'avance (x) par corrélation d'images.

3. Dispositif (10) d'inspection de bande blister selon l'une des revendications précédentes, **caractérisé par** un dispositif de convoyage (47) pour convoyer automatiquement la bande blister (14).

4. Dispositif (10) d'inspection de bande blister selon la revendication 3, **caractérisé en ce que**
le dispositif de convoyage (47) comprend
- un dispositif d'enroulement (48) qui possède un dévidoir d'enroulement (50) et un moteur d'entraînement (52) pour entraîner le dévidoir d'enroulement (50),
- le moteur d'entraînement (52) étant connecté au dispositif de détection d'avance (24) de telle sorte qu'une fréquence de rotation du dévidoir d'enroulement (50) dépend de la longueur de la bande blister (14) qui a été détectée le dispositif de détection d'avance (24).
